(19) **Europäisches Patentamt / European Patent Office / Office européen des brevets**

(11) **EP 3 674 274 B1**

(12) **EUROPEAN PATENT SPECIFICATION**

(45) Date of publication and mention of the grant of the patent:
**16.02.2022 Bulletin 2022/07**

(21) Application number: **18892483.1**

(22) Date of filing: **25.10.2018**

(51) International Patent Classification (IPC):
**C04B 35/10** (2006.01)  **B24D 3/34** (2006.01)
**C04B 35/107** (2006.01)  **C09K 3/14** (2006.01)
**C04B 35/109** (2006.01)  **B24D 3/06** (2006.01)
**C04B 35/626** (2006.01)  **B24D 3/28** (2006.01)

(52) Cooperative Patent Classification (CPC):
**C09K 3/1436; B24D 3/06; B24D 3/28; B24D 3/34; C04B 35/107; C04B 35/109; C04B 35/6261; C04B 35/62655; C09K 3/1427;** C04B 2235/3201; C04B 2235/3232; C04B 2235/3256; C04B 2235/3258; C04B 2235/3272; C04B 2235/3418;    (Cont.)

(86) International application number:
**PCT/JP2018/039746**

(87) International publication number:
**WO 2019/123833 (27.06.2019 Gazette 2019/26)**

(54) **FUSED ALUMINA GRAINS, METHOD FOR PRODUCING FUSED ALUMINA GRAINS, GRINDSTONE, AND COATED ABRASIVE**

GESCHMOLZENE ALUMINIUMOXIDKÖRNER, VERFAHREN ZU DEREN HERSTELLUNG, SCHLEIFSTEIN UND BESCHICHTETES SCHLEIFMITTEL

GRAINS D'ALUMINE FUSIONNÉS, LEUR PROCÉDÉ DE PRODUCTION, MEULE ET ABRASIF REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2017 JP 2017243237**

(43) Date of publication of application:
**01.07.2020 Bulletin 2020/27**

(73) Proprietor: **Showa Denko K.K.**
**Tokyo 105-8518 (JP)**

(72) Inventors:
• **MIYAISHI, So**
**Shiojiri-shi, Nagano 399-6461 (JP)**
• **TAKANO, Kazuaki**
**Shiojiri-shi, Nagano 399-6461 (JP)**

• **YAMAOKA, Satoshi**
**Shiojiri-shi, Nagano 399-6461 (JP)**

(74) Representative: **Strehl Schübel-Hopf & Partner**
**Maximilianstrasse 54**
**80538 München (DE)**

(56) References cited:
**WO-A1-2016/024624    CN-A- 107 235 741**
**CN-B- 102 814 745    JP-A- H0 796 164**
**JP-A- H1 157 957    JP-A- S62 278 121**
**JP-A- 2006 111 508**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C04B 2235/72; C04B 2235/725; C04B 2235/77;
C04B 2235/9607

**Description**

Technical Field

The present invention relates to electrofused alumina grains and a method for producing the electrofused alumina grains, and to a grindstone and a coated abrasive including the electrofused alumina grains.

Background Art

Alumina abrasives specified in JIS R 6111-2005 are called artificial abrasives and used as a constituent element for abrasive grindstones and coated abrasives. As specified in JIS R 6111-2005, alumina abrasives include white fused alumina abrasives (WA), ruby fused alumina abrasives (PA), and mono-crystalline fused alumina abrasives (HA). These are produced by fusing (i.e., electrofusing) an alumina material consisting of alumina purified by a Bayer process, in an electric furnace, then solidifying it, and grinding and size-regulating the resultant mass or crushing and size-regulating the mass. The toughness of these abrasives is in a relation of HA > PA > WA.

These conventional alumina abrasives may not have sufficient grinding performance in applications of grinding and machining hardly-machinable materials. Thus, improving grinding performance of alumina abrasives has been attempted (e.g., Patent Literatures 1 and 2).

Patent Literature 1 describes a method of improving grinding performance of alumina abrasives by heating high-purity fused alumina abrasive grains having an alumina content of 99.0% or more at 1600 to 1850°C for 30 minutes to 2 hours. In grinding electrofused alumina ingots, defects, fine flaws, and cracks occur in the abrasive grains, and the crush strength of the abrasive grains decreases. The technique of Patent Literature 1 improves the crush strength of the abrasive grains by heating the abrasive grains under predetermined conditions to thereby facilitate atomic diffusion and rearrangement and evaporate $Na_2O$ contained in the abrasive grains. However, grindstones including the abrasive grains in accordance with this technique are not able to provide sufficiently satisfactory grinding performance, and higher grinding performance is required.

The literature mentions that, in the case where fused alumina abrasive grains having a high content of impurities such as $TiO_2$ and $SiO_2$ are fired at a temperature of about 1000 to 1300°C, cracks in the abrasive grains are eliminated and the crushing strength of the abrasive grains increases, whereas, in the case where fused alumina abrasive grains having a high content of impurities are treated at a high temperature such as 1400°C or higher, the strength rather decreases. The literature also mentions that, in the case where abrasive grains having a high content of impurities are treated at a high temperature, sintering of the abrasive grains (hereinbelow, grain binding) occurs and thus, crushing is required, which is troublesome.

Patent Literature 2 describes a method in which aluminum titanate is formed by subjecting electrofused alumina grains containing titanium oxide to heat treatment, and the surfaces of the electrofused alumina grains is coated with the formed aluminum titanate to thereby enhance the strength and toughness of the electrofused alumina grains. The literature discloses that the electrofused alumina grains produced by this method have a decrease in the C-coefficient (i.e., an increase in the toughness) and an increase in the micro-Vickers hardness. The literature also discloses that using the electrofused alumina grains as abrasive grindstones can achieve more excellent grinding performance than that of conventional white electrofused alumina abrasives and single-crystalline electrofused alumina abrasives. From this disclosure, it can be seen that enhancing the toughness and micro-Vickers hardness of electrofused alumina grains is effective for improving the grinding performance. However, as described in Examples of the literature, heat treatment of electrofused alumina grains containing titanium oxide leads to caking of the grains (i.e., causes grain binding). For this reason, there is a problem in that crushing is required and thus labor is entailed. There is also a problem in that this crushing leads to a decrease in the yield of electrofused alumina grains having an intended grain size.

Citation List

Patent Literature

   PTL 1: JP S50-80305A
   PTL 2: JP H07-215717A

CN 107 23555741 A discloses electrofused alumina particles having about 0.5-1 wt% zirconium and about 0.5-1 wt% molybdenum.

Summary of Invention

Technical Problem

As described above, conventional techniques have not provided electrofused alumina grains capable of preventing grain binding on production and of achieving high grinding performance. It is an object of the present invention to provide electrofused alumina grains capable of preventing grain binding on production and of achieving high grinding performance and a method for producing the electrofused alumina grains, and to a grindstone and a coated abrasive including electrofused alumina grains.

Solution to Problem

The present inventors have intensively studied to find electrofused alumina grains that can prevent grain binding on production and achieve high grinding performance. The present invention is set forth in the appended claims.

Advantageous Effect of Invention

According to the present invention, there can be provided electrofused alumina grains causing no grain binding on production and having excellent grinding performance and a method for producing the electrofused alumina grains, as well as a grindstone and a coated abrasive including the electrofused alumina grains.

Brief Description of Drawings

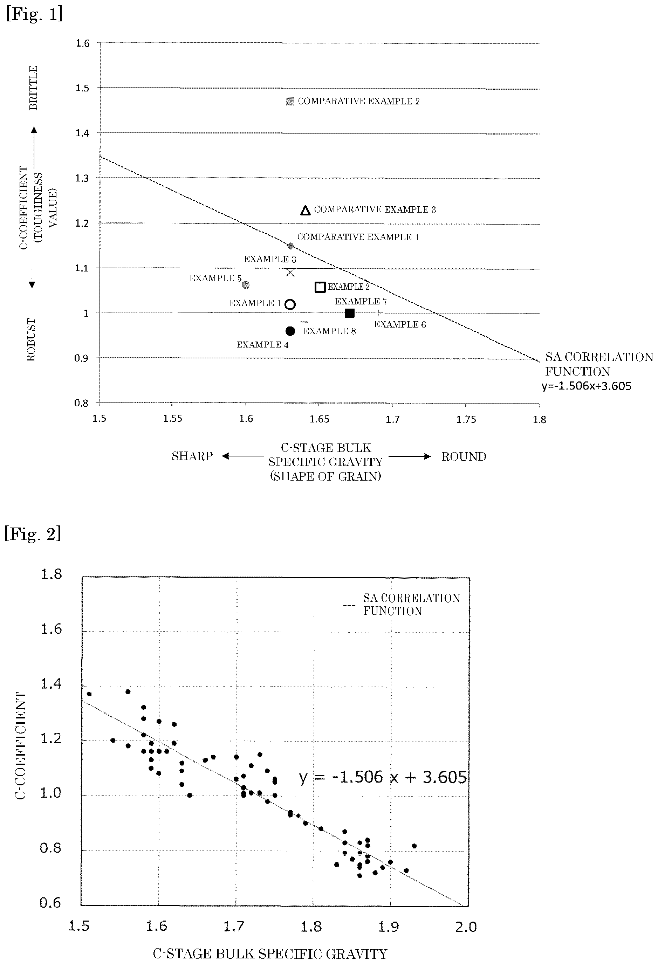

[Fig. 1] Fig. 1 is a graph drawn by plotting the C-stage bulk specific gravity and the C-coefficient of Examples 1 to 8 and Comparative Examples 1 to 3, in which graph the horizontal axis indicates the C-stage bulk specific gravity of electrofused alumina grains and the vertical axis indicates the C-coefficient of the electrofused alumina grains.
[Fig. 2] Fig. 2 is a graph showing an approximate linear function derived from the results of measurement of SA abrasive grains in three grain sizes: F36, F80, and F120 (manufactured by Showa Denko K. K.), as specified in JIS R 6001-1998, in which measurement 20 grains of each grain size were measured. The SA abrasive grains are alumina single-crystal abrasive grains, and are an abrasive mainly used for grinding and machining hardly machinable materials. The SA abrasive grains contain 99.6% by mass of $Al_2O_3$, 0.03% by mass of $SiO_2$, 0.03% by mass of $Fe_2O_3$, and 0.3% by mass of $TiO_2$.

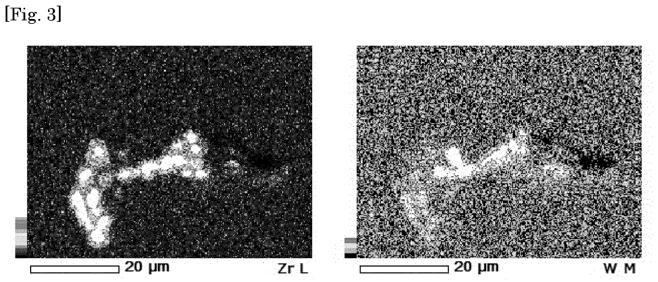

[Fig. 3] Fig. 3 shows photographs showing the results of element mapping analysis by energy-dispersive X-ray spectroscopy of Example 4.

Description of Embodiment

Hereinbelow, the present invention will be described in detail. In the following description, the phrase "A to B" referring to a numerical range indicates a numerical range including A and B that are the end points. That is, it means a numerical range of "A or more and B or less" (in the case of A < B) or "A or less and B or more" (in the case of A > B).

[Electrofused Alumina Grains]

In this description, the electrofused alumina grains are alumina grains obtained by fusing and solidifying a material of alumina, as purified by a Bayer process, in an electric furnace such as an arc furnace to provide an ingot, and pulverizing and size-regulating the ingot, or alumina grains obtained by crushing and size-regulating the ingot.
The electrofused alumina grains of the present invention contain at least either one of tungsten or molybdenum. Accordingly, the electrofused alumina grains causing no grain binding on production and having excellent grinding performance can be provided.
The electrofused alumina grains of the present invention further contain zirconium.

(Tungsten and Molybdenum Content)

The total of the tungsten content in terms of $WO_3$ and the molybdenum content in terms of $MoO_3$ is 0.05 to 3.00% by mass, preferably 0.10 to 2.50% by mass, further preferably 0.20 to 2.00% by mass. The content herein means a content determined by the analysis method described in Examples mentioned below.

By setting the total of the tungsten content in terms of $WO_3$ and the molybdenum content in terms of $MoO_3$ to 0.05% by mass or more, higher toughness can be achieved.

By setting the total of the tungsten content in terms of $WO_3$ and the molybdenum content in terms of $MoO_3$ to 3.00% by mass or less, high hardness originally possessed by alumina can be maintained.

By setting the total of the tungsten content in terms of $WO_3$ and the molybdenum content in terms of $MoO_3$ within a range of 0.05 to 3.00% by mass, high hardness and high toughness can be simultaneously provided. Simultaneously providing high hardness and high toughness enables excellent grinding performance to be achieved.

(Effect of Tungsten and Molybdenum on Prevention of Grain Binding)

The fact that occurrence of grain binding on production can be avoided when at least either one of tungsten or molybdenum is contained in the electrofused alumina grains is presumed to be due to the following principle. In the electrofused alumina grains as described in Patent Literature 2, the titanium compound, which is relatively highly reactive with alumina on heat treatment, precipitates on the surface of the grains, and consequently, grain binding occurs. Meanwhile, in the present invention, at least either one of tungsten or molybdenum, which is relatively low reactive with alumina, is contained. Thus, it is expected that no grain binding occurs after heat treatment, and additionally, as a result of high hardness and high toughness simultaneously provided, the grinding performance is excellent.

(Zirconium Content)

The zirconium content in terms of $ZrO_2$ in the electrofused alumina grains is preferably 0.01 to 2.00% by mass, more preferably 0.02 to 1.75% by mass, further preferably 0.03 to 1.50% by mass. The content herein means a content determined by the analysis method described in Examples mentioned below.

By setting the zirconium content in terms of $ZrO_2$ to 0.01% by mass or more, higher toughness due to co-addition can be achieved.

By setting the zirconium content in terms of $ZrO_2$ to 2.00% by mass or less, high hardness originally possessed by alumina can be maintained.

The zirconium content in terms of $ZrO_2$ is preferably 40 to 67 mol, more preferably 42 to 63 mol, further preferably 43 to 59 mol relative to 100 mol in total of the tungsten content in terms of $WO_3$ and the molybdenum content in terms of $MoO_3$.

By setting the zirconium content to 40 mol or more relative to 100 mol in total of the tungsten content in terms of $WO_3$ and the molybdenum content in terms of $MoO_3$, sufficient higher toughness due to co-addition can be confirmed.

By setting the zirconium content to 67 mol or less relative to 100 mol in total of the tungsten content in terms of $WO_3$ and the molybdenum content in terms of $MoO_3$, no grain binding occurs on production, and additionally, high Vickers hardness originally possessed by alumina can be maintained.

(Effect of Tungsten and Molybdenum on Improvement of Grinding Performance)

The fact that grinding performance of the electrofused alumina grains is improved when at least either one of tungsten or molybdenum is contained in the electrofused alumina grains is presumed to be due to the following principle. A portion of tungsten and molybdenum present in the inside, on the grain boundary, and on the surface of the electrofused alumina grains is expected to be present as $ZrW_2O_8$ and $ZrMo_2O_8$, which have a negative coefficient of thermal expansion. This causes compression stress to be applied on the electrofused alumina grains after heat treatment to thereby provide higher toughness. Tungsten and molybdenum scarcely dissolve as solid inside alumina, and thus the hardness also does not decrease.

(C-Coefficient and C-Stage Bulk Specific Gravity)

The electrofused alumina grains of the present invention satisfy the following expression (1), preferably satisfy the following expression (2), more preferably satisfy the following expression (3), particularly preferably satisfy the following expression (4), most preferably satisfy the following expression (5), wherein x indicates the C-stage bulk specific gravity of the electrofused alumina grains, and y indicates the C-coefficient of the electrofused alumina grains. Accordingly, the grinding performance of the electrofused alumina grains of the present invention can be enhanced.

$$y < -1.506x + 3.605 \ (1)$$

$$y < \text{-}1.506x + 3.595 \ (2)$$

$$y < \text{-}1.506x + 3.585 \ (3)$$

$$y < \text{-}1.506x + 3.575 \ (4)$$

$$y < \text{-}1.506x + 3.565 \ (5)$$

The C-coefficient is the same as the C-coefficient defined in JIS R6128-1987 (Ball mill test for toughness of artificial abrasives). The method for measuring the C-coefficient is described in detail in the section of Examples mentioned below.

Regarding the C-stage bulk specific gravity, the bulk specific gravity of the sample remaining on the 3rd-stage sieve, sieved using a standard sieve specified in JIS R6001-1987, on measurement of the C-coefficient thereof is defined as a value of the C-stage bulk specific gravity measured by the method specified in JIS R6126-1970. The method for measuring the C-stage bulk specific gravity is described in detail in the section of Examples mentioned below.

Generally, the smaller the grain size, the smaller the value of the C-stage bulk specific gravity, and the larger the grain size, the larger the value of the C-stage bulk specific gravity. However, in the case of a sample that has been size-regulated to have an equivalent grain size as the electrofused alumina grains, the C-stage bulk specific gravity may change depending on the shape of the grains. With larger quantities of sharp grains or flat grains, a rate of free-fall filling is lower, and thus the C-stage bulk specific gravity is smaller. With larger quantities of nearly spherical grains, a rate of free-fall filling is higher, and thus the C-stage bulk specific gravity thereof is larger.

There is a negative correlation between the C-coefficient and the C-stage bulk specific gravity (see Fig. 2). As mentioned above, a sample having a small C-stage bulk specific gravity contains large quantities of sharp grains and flat grains. Accordingly, when the C-coefficient is measured using the sample, grinding in a ball mill readily proceeds to thereby lead to a larger value of the C-coefficient thereof (lower toughness). In contrast, a sample having a large C-stage bulk specific gravity contains large quantities of nearly spherical grains. For this reason, when the C-coefficient is measured using these, grinding in a ball mill is unlikely to proceed to thereby lead to a smaller value of the C-coefficient (higher toughness).

As mentioned above, the electrofused alumina grains of the present invention satisfy the expression (1) mentioned above. Considering that x > 0 and y > 0, the region of the x (C-stage bulk specific gravity) - y (C-coefficient) plane, satisfying the expression (1) mentioned above, is a region in which both the value of x (C-stage bulk specific gravity) and the value of y (C-coefficient) are small values. This indicates that the electrofused alumina grains of the present invention are sharp grains or flat grains, and the electrofused alumina grains of the present invention have high toughness. From the fact that sharp grains and flat grains have higher grinding performance than nearly spherical grains and that grains having higher toughness have higher grinding performance, it can be seen that the electrofused alumina grains of the present invention satisfying the expression (1) mentioned above have higher grinding performance.

(Other Elements than Aluminum, Oxygen, Titanium and Magnesium)

The electrofused alumina grains of the present invention may comprise any other elements than aluminum, oxygen, zirconium, tungsten, and molybdenum. The total content of the other elements than aluminum, oxygen, zirconium, tungsten, and molybdenum in the electrofused alumina grains of the present invention is preferably 1.5 atomic molar % or less in terms of oxides thereof. When the total content of the other elements than aluminum, oxygen, zirconium, tungsten, and molybdenum is 1.5 atomic molar % or less in terms of oxides thereof, the electrofused alumina grains of the present invention have sufficient grinding performance. The total content of the other elements than aluminum, oxygen, zirconium, tungsten, and molybdenum is more preferably 1.0 atomic molar % or less in terms of oxides thereof, even more preferably 0.5 atomic molar % or less in terms of oxides thereof, most preferably 0 atomic molar % in terms of oxides thereof. Examples of the other elements than aluminum, oxygen, zirconium, tungsten, and molybdenum include sodium, silicon, calcium, iron, and chromium.

[Method for Producing Electrofused Alumina Grains]

A method for producing electrofused alumina grains of the present invention comprise step (A) of preparing a mixture material by mixing an alumina material and a material comprising at least either one of a tungsten compound or a molybdenum compound, wherein the amount of the tungsten compound and the molybdenum compound blended is such that the content of the tungsten compound in terms of $WO_3$ and the molybdenum compound in terms of $MoO_3$ in the ingot formed in step (B) is from 0.05 to 3.00% by mass; step (B) of forming an ingot from the mixture material by an electrofusing process, step (C) of grinding the ingot to prepare a ground powder, step (D) of size-regulating the ground powder to have a predetermined grain size to prepare size-regulated grains, and step (E) of heating the size-regulated grains at a heating temperature of 1000°C or higher to give electrofused alumina grains. Accordingly, there can be provided electrofused alumina grains of the present invention capable of avoiding occurrence of grain binding on production and having excellent grinding performance.

(Step (A))

In the step (A), an alumina material and a material comprising at least either one of a tungsten compound or a molybdenum compound are mixed to prepare a mixture material. For example, an alumina material and a material comprising at least either one of a tungsten compound or a molybdenum compound as weighed in a predetermined blending ratio are mechanically mixed using a mixer ora ball mill or by manually mixed using a shovel.

In the step (A), it is preferable to mix an alumina material, a zirconium compound, and at least either one of a tungsten compound or a molybdenum compound to prepare a mixture material.

<Alumina Material>

Examples of the alumina material for use in the method for producing electrofused alumina grains of the present invention include alumina purified by a Bayer process.

<Tungsten Compound and Molybdenum Compound>

Examples of the tungsten compound for use in the method for producing electrofused alumina grains of the present invention include tungsten oxides, tungsten, tungsten sulfide, ammonium tungstate, and tungstic acid. Among these, in particular, tungsten trioxide as a tungsten oxide is preferably used.

Examples of the molybdenum compound for use in the method for producing electrofused alumina grains of the present invention include molybdenum oxides, molybdenum, molybdenum sulfide, ammonium molybdate, ammonium dimolybdate, hexammonium heptamolybdate, and molybdic acid. Among these, in particular, molybdenum trioxide as a molybdenum oxide is preferably used.

The amount of the tungsten compound and the molybdenum compound blended in the step (A) is such an amount that the content of tungsten in terms of $WO_3$ and molybdenum in terms of $MoO_3$ in the ingot is from 0.05 to 3.00% by mass, preferably such an amount that the content is from 0.10 to 2.50% by mass, further preferably such an amount that the content is from 0.20 to 2.00% by mass.

<Zirconium Compound>

Examples of the zirconium compound for use in the method for producing electrofused alumina grains of the present invention include zirconium oxide, zirconium, zirconium carbonate, zirconium sulfate, and zirconium sulfide. Of these, in particular, zirconium oxide is preferably used.

The amount of the zirconium compound blended in the step (A) is preferably such an amount that the zirconium content in terms of $ZrO_2$ in the ingot is from 0.01 to 2.00% by mass, more preferably such an amount that the zirconium content is 0.02 to 2.00% by mass, further preferably such an amount that the zirconium content is 0.03 to 1.75% by mass.

The amount of the zirconium compound blended in the step (A) is preferably such an amount that the zirconium content in terms of $ZrO_2$ in the ingot is from 40 to 67 mol, more preferably such an amount that the zirconium content is 42 to 63 mol, further preferably such an amount that the zirconium content is 43 to 59 mol, particularly preferably such an amount that the zirconium content is 45 to 56 mol, relative to 100 mol in total of the tungsten content in terms of $WO_3$ and the molybdenum content in terms of $MoO_3$.

(Step (B))

In the step (B), an ingot is formed from the mixture material by an electrofusing method. The electrofusing method is a method of fusing the mixture material using an electric furnace such as an electric arc furnace at a heating temperature of, for example, about 2000 to about 2500°C. After completion of fusing, for example, the electric furnace is inclined, and the molten material is discharged out from the pour spout positioned through the furnace wall, and cast into a mold provided in advance to produce an ingot. The ingot is polycrystalline alumina.

(Step (C))

In the step (C), the ingot is ground to prepare a ground powder. The ingot is roughly broken using a roll breaker or a drop hammer, for example, then visually screened, and thereafter ground using a grinding apparatus such as an impeller breaker, a jaw crusher, a roll crusher, an edge runner, or a conical ball mill. The particle size of the ground powder is preferably set within a range of 50 $\mu$m to 8 mm in accordance with the grain size required in each product.

(Step (D))

In the step (D), the ground powder is size-regulated to have a predetermined grain size to prepare size-regulated grains. For example, when the electrofused alumina grains to be produced correspond to rough grains specified in JIS R 6001-1998, the ground powder is size-regulated to have a predetermined grain size via a sieving step. Alternatively, when the electrofused alumina grains to be produced correspond to a fine powder specified in JIS R 6001-1998, the ground powder is further finely powdered using a ball mill or an air mill, and then the resultant fine powder is size-regulated to have a predetermined grain size via a purification step.

(Step (E))

In the step (E), the size-regulated grains are heated at a heating temperature of 1000°C to 1900°C to provide electrofused alumina grains. Accordingly, the strength and the toughness of the electrofused alumina grains can be enhanced.
For example, the size-regulated grains are placed in a container such as a sagger and heated in an electric furnace such as a muffle furnace or a tunnel-type continuous firing furnace, or the size-regulated grains are directly heated in a firing apparatus such as a rotary kiln.
The heating temperature in the step (E) is 1000 to 1900°C, preferably 1000 to 1800°C, more preferably 1200 to 1600°C, further preferably 1300 to 1500°C.
When the heating temperature is 1000°C or higher, the strength of the electrofused alumina increases. When the heating temperature is 1900°C or lower, the size-regulated grains can be heated without sintering of the grains. The retention time for heating in the heat treatment is preferably 60 minutes or more. The atmosphere in the heat treatment is preferably an air atmosphere.

(Other Steps)

Between the step (C) and the step (D), a step of removing impurities such as fine powder and magnetic material formed in the step (C), and a steps of washing with acid and/or washing with water may be added as required. Accordingly, impurities can be prevented from diffusing inside the size-regulate grains in the heat treatment of the step (E).
After the step (E), the resultant electrofused alumina grains may be further size-regulated. The size-regulation method may be, for example, the same method as that of the step (D). Accordingly, electrofused alumina grains having a more regulated grain size can be provided.

[Grindstone]

The grindstone of the present invention comprises the electrofused alumina grains of the present invention. Accordingly, a grindstone having excellent grinding performance can be provided. Specifically, the grindstone of the present invention is a product obtained by binding the electrofused alumina grains of the present invention with a binder, and is composed mainly of the electrofused alumina grains, the binder, and pores. The grindstone is produced by molding and hardening the electrofused alumina grains with a binder such as a vitrified bond, a metal bond, or a resin bond. The binder is preferably a vitrified bond. The vitrified bond is generally called frit, as prepared by adequately blending feldspar, china stone, borax, and clay, and examples of the components thereof include $SiO_2$, $B_2O_3$, $Al_2O_3$, $Fe_2O_3$, CaO, MgO, $Na_2O$, and $K_2O$. A grindstone obtained using a vitrified bond (vitrified grindstone) is produced by adding a small amount of a molding aid such as dextrin or phenolic resin to a vitrified bond, mixing it with electrofused alumina grains, and press-molding and then firing the mixture. The firing temperature is preferably 950 to 1150°C. The electrofused alumina grains of the present invention can also be used as abrasive grains for grindstones such as a resinoid grindstone, a rubber grindstone, a silicate grindstone, a shellac grindstone, and a magnesia grindstone, in addition to the vitrified grindstone.

[Coated Abrasive]

The coated abrasive of the present invention comprises the electrofused alumina grains of the present invention. Accordingly, a coated abrasive having excellent grinding performance can be provided. The coated abrasive can be produced by bonding electrofused alumina grains to a substrate with an adhesive. A preferred adhesive is a phenolic resin adhesive because of providing excellent abrasive performance and having excellent waterproofness. When resorcinol or a derivative thereof is used in combination with a phenolic resin adhesive, the curing condition for the phenolic resin adhesive can be relaxed. Examples of the substrate include paper, woven fabric, and nonwoven fabric. For a grinding belt for heavy grinding, a woven fabric of polyester fibers may also be used. Additionally, as an nonwoven abrasive fabric, a nonwoven fabric of synthetic fibers such as nylon can be used as the substrate. The coated abrasive includes, as specified in JIS as product standards, an abrasive cloth (R6251-2006), an abrasive paper (R6252-2006), a waterproof abrasive paper (R6253-2006), an abrasive disc (R6255-2014), an abrasive belt (R6256-2006) coated abrasives - cylindrical sleeve (R6257-2006). An important application of the coated abrasive of the present invention, among applications not specified in JIS, is a nonwoven abrasive fabric. This is a flexible polishing material (polishing cloth) for a polishing nonwoven fabric composed of three constituent elements of a polishing material, fibers (nylon, polyester fibers, etc.) and an adhesive. This has a three-dimensional network structure of irregularly intercrossing constituent element fibers and a large-volume connected voids, has a thickness of 2 to 8 mm or so, and has structural characteristics of excellent flexibility and compression restorability.

Examples

The present invention is described more specifically with reference to Examples and Comparative Examples given hereinbelow, but the present invention is not restricted by these Examples in any way.

[Evaluation of Electrofused Alumina Grains of Examples and Comparative Examples]

The electrofused alumina grains of Examples and Comparative Examples were evaluated as follows.

(C-Stage Bulk Specific Gravity)

In accordance with JIS R6126-1970, the C-stage bulk specific gravity was determined using an apparatus composed of a funnel, a stopper, and a cylinder and a support therefor by a process mentioned below.

(1) The volume V (ml) of the cylinder was measured.
(2) The outlet port of the funnel was plugged with a stopper, about 120 ml of a sample was placed into the funnel, and the cylinder was disposed immediately below the funnel.
(3) The stopper was withdrawn to drop the total amount of the sample down into the cylinder, the sample banked up on the top of the cylinder was removed by lightly scooping it, and then the weight of the sample put in the cylinder was measured.
(4) The operation of (2) and (3) was repeated for the same sample to obtain three measured values: W1 (g), W2 (g), and W3 (g).
(5) From the volume V (ml) of the cylinder obtained in (1), and the three measured values: W1 (g), W2 (g), and W3 (g) obtained in (4), the C-stage bulk specific gravity was calculated by the following expression (7).

$$\text{C-Stage Bulk Specific Gravity (g/ml)} = \{(W1 + W2 + W3) / 3\} / V \quad (7)$$

(C-Coefficient)

Using a standard sieve specified in JIS R6001-1987, 250 g of electrofused alumina grains were sieved by a ro-tap tester for 10 minutes. The total amount of the sample remaining on the 3rd stage sieve was further sieved for 10 minutes, and 100 g of the electrofused alumina grains remaining again on the 3rd stage sieve was used as a test sample. The test sample was ground with a ball mill by the method specified in JIS R6128-1975 to prepare a ground sample. The ground sample was sieved using a standard sieve for 5 minutes, and the weight of the ground sample remaining on the 4th sieve was referred to as R (x). As a standard sample, a black silicon carbide abrasive F 60 specified in JIS R6128-1975 was subjected to the same operation as above, and after grinding with a ball mill, the weight of F60 remaining on the 4th stage sieve was referred to as R(s). The C-coefficient was calculated by the following expression (6).

$$\text{C-coefficient} = \log(100/R(x)) / \log(100/R(s)) \quad (6)$$

When the degree of grinding with a ball mill is smaller (that is, when the toughness is higher), R (x) is larger, and thus, a sample having higher toughness shows a smaller value of the C-coefficient.

(Micro-Vickers Hardness)

Using a hardness tester, model name MVK-VL, manufactured by Akashi Corporation as an apparatus, measurement was performed under conditions of a load of 0.98 N and an injection time of an indenter of 10 seconds, and the average value of the measured values at 15 points was taken as the micro-Vickers hardness.

(Grain Binding)

Electrofused alumina grains size-regulated to F60 specified in JIS R6001-1998 before heat treatment were placed in a sagger and heated at 1500°C for an hour. Sieved were 500 g of the resultant electrofused alumina abrasive grains using a sieve having an opening of 500 $\mu$m for a minute while impact was applied by a ro-tap tester. Thereafter, the mass of the electrofused alumina abrasive grains on the sieve was weighed. In the case where the mass was 5 g or more, it was determined that grain binding was present.

(Element Mapping by Energy-dispersive X-ray Spectroscopy)

The composite sintered body prepared in Example 4 was allowed to be contained in a transparent resin powder (acrylic resin manufactured by Refine Tec Ltd.: 95 to 100% by mass, methyl methacrylate: 0 to 5% by mass, dibenzoyl peroxide: 0 to 1% by mass). This resin was thermoset-molded and then cut, and the section was mirror-polished and platinum-deposited. The section comprising a sample surface was subjected to element mapping analysis. The distribution state of tungsten and zirconium elements on the polished surface of Example 4 was measured via element mapping analysis using an energy dispersive X-ray spectrometer (model name JED-2300, manufactured by JEOL Ltd.).

[Electrofused Alumina Grains of Examples and Comparative Examples]

Materials were each blended such that the content of the materials corresponded to the values shown in Table 1, and the blend was mixed with a Bayer-process alumina powder to prepare a mixture material. Then, the mixture material was fused in an electric arc furnace (fusing conditions: power consumption of the electric arc furnace: 9.0 kWh, heating time: 20 minutes, and atmosphere gas: air), and the resultant melt was cooled to provide an ingot.
The materials used were as follows.

Titanium oxide: manufactured by KANTO CHEMICAL CO., INC., "Titanium(IV) oxide, Rutile form", grade "special grade"
Zirconium oxide: manufactured by KANTO CHEMICAL CO., INC., "zirconium oxide, 3N", grade "high purity reagent"
Molybdenum oxide: manufactured by KANTO CHEMICAL CO., INC., "molybdenum oxide (VI)", grade "Cica special grade"
Tungsten oxide: manufactured by KANTO CHEMICAL CO., INC., "tungsten oxide (VI)", grade "Cica first grade"

A jaw crusher was used to roughly grind the resultant ingot, and thereafter, the roughly ground ingot was ground in a roll mill to prepare a ground powder. Then, using a sieve mesh having an opening corresponding to the grain size F80 specified as the grain size of abrasive in JIS R6001-1998, the ground powder was size-regulated to prepare size-regulated grains.
Placed were 300 g of the grains size-regulated to a grain size F80 in an alumina crucible. Then the grains were heated up to 1500°C in an electric furnace (in air atmosphere) over three hours and kept at 1500°C for an hour. The heating was stopped and the grains were left to cool in the furnace. After cooled to room temperature, the resultant grains were size-regulated using a sieve mesh of 250 to 150 $\mu$m to remove coarse grains formed by caking of the grains and fine grains, thereby providing electrofused alumina grains of Examples 1 to 10 and electrofused alumina grains of Comparative Examples of 1 to 3 corresponding to an F80-grade alumina abrasive.
In Comparative Example 1, SA abrasive grains having the F80 grain size manufactured by Showa Denko K. K. were used. The SA abrasive grains are alumina single-crystal abrasive grains, and are an abrasive mainly used for grinding and machining hardly machinable materials. The SA abrasive grains contain 99.6% by mass of $Al_2O_3$, 0.03% by mass of $SiO_2$, 0.03% by mass of $Fe_2O_3$, and 0.3% by mass of $TiO_2$.

In Comparative Example 2, WA abrasive grains having the F80 grain size manufactured by Showa Denko K. K. were used. The WA abrasive grains are white electrofused alumina abrasive grains, and are an abrasive suitable for applications in which heat generation should be avoided. The WA abrasive grains contain 99.8% by mass of $Al_2O_3$, 0.02% by mass of $SiO_2$, 0.02% by mass of $Fe_2O_3$, and the balance of 0.16% by mass comprises $Na_2O$.

(Chemical Analysis)

The tungsten content in terms of $WO_3$, the molybdenum content of in terms of $MoO_3$, the zirconium content in terms of $ZrO_2$, and the titanium content in terms of $TiO_2$ in the electrofused alumina grains of Examples and Comparative Examples were measured by a fluorescent X-ray elementary analysis method. The measurement apparatus used was "ZSX Primus" manufactured by Rigaku Corporation.
The measurement results are shown in Table 1.
All the mass ratios in Table 1 mean weight ratios based on the weight of the alumina grains.

Table 1

| | Weight ratio of $WO_3$ (% by mass) | Weight ratio of $MoO_3$ (% by mass) | Weight ratio of $ZrO_2$ (% by mass) | Weight ratio of $TiO_2$ (% by mass) | Content of $ZrO_2$ (mol/total mol of $WO_3$ and $MoO_3$) | Firing temperature (°C) |
|---|---|---|---|---|---|---|
| Example 1* | 0.70 | | | | | 1500 |
| Example 2* | | 0.61 | | | | 1500 |
| Example 3 | 0.16 | | 0.05 | | 59 | 1500 |
| Example 4 | 0.67 | | 0.19 | | 53 | 1500 |
| Example 5 | 1.16 | | 0.38 | | 62 | 1500 |
| Example 6 | | 0.18 | 0.09 | | 58 | 1500 |
| Example 7 | | 0.59 | 0.27 | | 53 | 1500 |
| Example 8 | | 1.22 | 0.55 | | 53 | 1500 |
| Example 9* | | 0.19 | | | | 1500 |
| Example 10* | | 1.21 | | | | 1500 |
| Comparative Example 1 | | | | 0.26 | | 1500 |
| Comparative Example 2 | | | | | | Not applied |
| Comparative Example 3 | | | 0.18 | | | 1500 |
| * Reference only | | | | | | |

[Evaluation Results]

The evaluation results of the C-stage bulk specific gravity ("C-Stage bulk" in the table), C-coefficient, micro-Vickers hardness, and grain binding of the electrofused alumina grains of Examples 1 to 10 and the electrofused alumina grains of Comparative Examples 1 to 3 are shown in the following Table 2.

Table 2

| | C-Stage bulk specific gravity | C-Coefficient | Micro- Vickers hardness (GPa) | Grain binding (mass of electrofused alumina abrasive grains on sieve) |
|---|---|---|---|---|
| Example 1* | 1.63 | 1.02 | 20.3 | No (0.1 g or less) |
| Example 2* | 1.65 | 1.06 | 20.7 | No (0.1 g or less) |
| Example 3 | 1.63 | 1.09 | 20.6 | No (0.1 g or less) |

(continued)

|  | C-Stage bulk specific gravity | C-Coefficient | Micro- Vickers hardness (GPa) | Grain binding (mass of electrofused alumina abrasive grains on sieve) |
|---|---|---|---|---|
| Example 4 | 1.63 | 0.96 | 20.4 | No (0.1 g or less) |
| Example 5 | 1.60 | 1.06 | 20.0 | No (0.1 g or less) |
| Example 6 | 1.69 | 1.00 | 20.3 | No (0.1 g or less) |
| Example 7 | 1.67 | 1.00 | 20.2 | No (0.1 g or less) |
| Example 8 | 1.64 | 0.98 | 20.8 | No (0.1 g or less) |
| Example 9* | 1.64 | 1.08 | 20.8 | No (0.1 g or less) |
| Example 10* | 1.63 | 1.08 | 20.5 | No (0.1 g or less) |
| Comparative Example 1 | 1.63 | 1.15 | 20.5 | Yes (130 g) |
| Comparative Example 2 | 1.63 | 1.47 | 20.4 | No (0.1 g or less) |
| Comparative Example 3 | 1.64 | 1.23 | 20.4 | No (0.1 g or less) |
| * Reference only | | | | |

From the comparison between Examples 1 to 10 (Examples 1, 2, 9, and 10 do not belong to the present invention and are for reference only) and Comparative Examples 1 to 3, it can be confirmed that no grain binding occurred even due to heat treatment on production of electrofused alumina grains and electrofused alumina grains having excellent grinding performance were provided.

From the comparison between Example 1 and Example 4, it can be confirmed that co-addition of tungsten and zirconium lowered the C-coefficient more than addition of tungsten alone, that is, the electrofused alumina grains became robuster.

From the comparison between Example 2 and Example 7, it can be confirmed that co-addition of molybdenum and zirconium lowered the C-coefficient more than in the case of addition of molybdenum alone, that is, the electrofused alumina grains became robuster.

A graph drawn by plotting the C-stage bulk specific gravity and the C-coefficient of Examples 1 to 10 and Comparative Examples 1 to 3 is shown in Fig. 1, in which graph the horizontal axis indicates the C-stage bulk specific gravity of the electrofused alumina grains and the vertical axis indicates the C-coefficient of the electrofused alumina grains. From this graph, it can be confirmed that the electrofused alumina grains of Examples 1 to 10 satisfy the expression (1) mentioned above and have excellent grinding performance.

As described above, there is a negative correlation between the C-coefficient and the C-stage bulk specific gravity. When the correlation is shown as a graph where the horizontal axis indicates the C-stage bulk specific gravity and the vertical axis indicates the C-coefficient, the correlation can be expressed as a positive linear function where the inclination is negative and the section is positive. Samples of the same abrasive material having a different grain size and a different C-stage bulk specific gravity are distributed in the vicinity of almost one and the same linear line. As an example, an approximate linear function derived from the results of measurement of SA abrasive grains in three grain sizes: F36, F80, and F120 (manufactured by Showa Denko K. K.), in which measurement 20 grains of each grain size were measured, is shown in Fig. 2.

Here, "high-performance abrasive grains" are defined as those having a sharp form (i.e., having a small bulk specific gravity) and having high toughness (i.e., also having a small C-coefficient value). In other words, this means that the abrasive grains present in the lower left in the graph of Fig. 2 have higher performance. Specifically, mono-crystalline electrofused alumina abrasives containing a titanium oxide content in terms of $TiO_2$ of 0.30% by mass (SA manufactured by Showa Denko K. K.) satisfy the correlation shown in Fig. 2, and the approximate linear function thereof is expressed by the following expression (9):

$$y = {-}1.506x + 3.605 \ (9)$$

wherein x represents the C-stage bulk specific gravity, and y represents the C-coefficient.

The electrofused alumina grains of Examples 1 to 10 satisfy the expression (1) mentioned above, which means that the electrofused alumina grains of Example 1 to 10 are high-performance abrasive grains containing larger quantities of sharp grains and flat grains as compared with the SA abrasive grains mentioned above (high-performance product) and also being excellent in toughness and have also more excellent grinding performance than that of the SA abrasive grains mentioned above (high-performance product). This is considered to be correct from the fact that, in Fig. 1, Comparative Example 2 and Comparative Example 3 do not fall within the range that satisfies the expression (1).

The results of the element mapping analysis by energy-dispersive X-ray spectroscopy of Example 4 are shown in Fig. 3. These results have revealed that a portion of tungsten and zirconium is present in the same region, suggesting that the portion is present in a state of a tungsten-zirconium compound.

## Claims

1. Electrofused alumina grains comprising zirconium and at least either one of tungsten or molybdenum, wherein the total of a tungsten content in terms of $WO_3$ and a molybdenum content in terms of $MoO_3$ is 0.05 to 3.00% by mass, and satisfying the following expression (1):

$$y < \text{-}1.506x + 3.605 \ (1)$$

wherein x represents the C-stage bulk specific gravity of the electrofused alumina grains, as determined in accordance with JIS R6126-1970 using an apparatus composed of a funnel, a stopper, and a cylinder and a support therefor by the following process:

(1) the volume V (ml) of the cylinder was measured;
(2) the outlet port of the funnel was plugged with a stopper, about 120 ml of a sample was placed into the funnel, and the cylinder was disposed immediately below the funnel;
(3) the stopper was withdrawn to drop the total amount of the sample down into the cylinder, the sample banked up on the top of the cylinder was removed by lightly scooping it, and then the weight of the sample put in the cylinder was measured;
(4) the operation of (2) and (3) was repeated for the same sample to obtain three measured values: W1 (g), W2 (g), and W3 (g);
(5) from the volume V (ml) of the cylinder obtained in (1), and the three measured values: W1 (g), W2 (g), and W3 (g) obtained in (4), the C-stage bulk specific gravity was calculated by the following expression (7):

$$\text{C-Stage Bulk Specific Gravity (g/ml)} = \{(W1 + W2 + W3) \ / \ 3\} \ /V \qquad (7);$$

and wherein y represents the C-coefficient of the electrofused alumina grains, as determined by a method wherein, using a standard sieve specified in JIS R6001-1987, 250 g of electrofused alumina grains were sieved by a ro-tap tester for 10 minutes; the total amount of the sample remaining on the 3rd stage sieve was further sieved for 10 minutes, and 100 g of the electrofused alumina grains remaining again on the 3rd stage sieve was used as a test sample; the test sample was ground with a ball mill by the method specified in JIS R6128-1975 to prepare a ground sample; the ground sample was sieved using a standard sieve for 5 minutes, and the weight of the ground sample remaining on the 4th sieve was referred to as R (x); as a standard sample, a black silicon carbide abrasive F 60 specified in JIS R6128-1975 was subjected to the same operation as above, and after grinding with a ball mill, the weight of F60 remaining on the 4th stage sieve was referred to as R(s); the C-coefficient was calculated by the following expression (6):

$$\text{C-coefficient} = \log(100/R(x)) \ / \ \log(100/R(s)) \qquad (6).$$

2. The electrofused alumina grains according to claim 1, wherein a zirconium content in terms of $ZrO_2$ is 0.01 to 2.00% by mass in the electrofused alumina grains.

3. The electrofused alumina grains according to claim 1 or 2, wherein the zirconium content in terms of $ZrO_2$ is 40 mol to 67 mol relative to 100 mol in total of the tungsten content in terms of $WO_3$ and the molybdenum content in terms

of MoO$_3$.

4. A method for producing electrofused alumina grains according to claim 1 comprising:

  step (A) of preparing a mixture material by mixing an alumina material, a zirconium compound, and at least either one of a tungsten compound or a molybdenum compound, wherein the amount of the tungsten compound and the molybdenum compound is such an amount that the content of the tungsten in terms of WO$_3$ and the molybdenum in terms of MoO$_3$ in an ingot formed in step (B) is from 0.05 to 3.00% by mass,
  step (B) of forming an ingot from the mixture material by an electrofusing process,
  step (C) of grinding the ingot to prepare a ground powder,
  step (D) of size-regulating the ground powder to have a predetermined grain size to prepare size-regulated grains, and
  step (E) of heating the size-regulated grains at a heating temperature of 1000°C or higher and 1900°C or lower to give electrofused alumina grains.

5. The method for producing electrofused alumina grains according to claim 4, wherein the amount of the zirconium compound blended in the step (A) of preparing the mixture material is such an amount that the zirconium content in terms of ZrO$_2$ in the ingot is from 0.01 to 2.00% by mass.

6. The method for producing electrofused alumina grains according to claim 4 or 5, wherein the amount of the zirconium compound blended in the step (A) of preparing the mixture material is such an amount that the zirconium content in terms of ZrO$_2$ in the ingot is from 40 mol to 67 mol relative to 100 mol in total of the tungsten content in terms of WO$_3$ and the molybdenum content in terms of MoO$_3$.

7. The method for producing electrofused alumina grains according to any one of claims 4 to 6, wherein the heating temperature in the step (E)of producing the electrofused alumina grains is 1200°C or higher and 1700°C or lower.

8. A grindstone comprising the electrofused alumina grains according to any one of claims 1 to 3.

9. A coated abrasive comprising the electrofused alumina grains according to any one of claims 1 to 3.


**Patentansprüche**

1. Elektrogeschmolzene Aluminiumoxidkörner, die Zirkonium und mindestens eines von Wolfram oder Molybdän umfassen, wobei der als WO$_3$ ausgedrückte Wolframgehalt und der als MoO$_3$ ausgedrückte Molybdängehalt insgesamt 0,05 bis 3,00 Masse-% beträgt und die folgende Gleichung (1) erfüllt:

$$y < -1{,}506x + 3{,}605 \ (1)$$

worin x das spezifische Gewicht der C-Stufe der elektrogeschmolzenen Aluminiumoxidkörner darstellt, wie es gemäß JIS R6126-1970 unter Verwendung einer Vorrichtung, die aus einem Trichter, einem Stopfen und einem Zylinder und einem Träger dafür besteht, durch das folgende Verfahren bestimmt wird:

  (1) das Volumen V (ml) des Zylinders wurde gemessen;
  (2) die Auslassöffnung des Trichters wurde mit einem Stopfen verschlossen, etwa 120 ml einer Probe wurden in den Trichter gegeben, und der Zylinder wurde unmittelbar unter dem Trichter aufgestellt;
  (3) der Stopfen wurde herausgezogen, um die Gesamtmenge der Probe in den Zylinder fallen zu lassen, die oben auf dem Zylinder aufgestaute Probe wurde durch leichtes Schöpfen entfernt, und dann wurde das Gewicht der in den Zylinder gegebenen Probe gemessen;
  (4) der Vorgang von (2) und (3) wurde für dieselbe Probe wiederholt, um drei Messwerte zu erhalten: W1 (g), W2 (g), und W3 (g);
  (5) aus dem in (1) erhaltenen Volumen V (ml) des Zylinders und den drei gemessenen Werten: W1 (g), W2 (g) und W3 (g), die in (4) erhalten wurden, wurde das spezifische Gewicht der C-Stufe durch den folgenden Ausdruck (7) berechnet:

$$\text{Spezifische Schüttdichte der C-Stufe (g/ml)} = \{(W1 + W2 + W3) / 3\} / V \quad (7);$$

und worin y den C-Koeffizienten der elektrogeschmolzenen Aluminiumoxidkörner darstellt, der durch ein Verfahren bestimmt wurde, bei dem unter Verwendung eines in JIS R6001-1987 spezifizierten Standardsiebs 250 g elektrogeschmolzene Aluminiumoxidkörner 10 Minuten lang durch einen Ro-Tap-Tester gesiebt wurden; die Gesamtmenge der Probe, die auf dem Sieb der dritten Stufe zurückblieb, 10 Minuten lang weiter gesiebt wurde, und 100 g der elektrogeschmolzenen Aluminiumoxidkörner, die wieder auf dem Sieb der dritten Stufe zurückblieben, als Testprobe verwendet wurden; die Testprobe mit einer Kugelmühle nach dem in JIS R6128-1975 angegebenen Verfahren gemahlen wurde, um eine gemahlene Probe herzustellen; die gemahlene Probe 5 Minuten lang mit einem Standardsieb gesiebt wurde und das Gewicht der gemahlenen Probe, das auf dem 4. Sieb zurückblieb, als R (x) bezeichnet wurde; als Standardprobe ein schwarzes Siliziumkarbid-Schleifmittel F 60, das in JIS R6128-1975 spezifiziert ist, dem gleichen Verfahren wie oben unterzogen wurde und nach dem Mahlen mit einer Kugelmühle das Gewicht von F 60, das auf dem Sieb der vierten Stufe zurückblieb, als R(s) bezeichnet wurde; und der C-Koeffizient durch den folgenden Ausdruck (6) berechnet wurde:

$$\text{C-Koeffizient} = \log(100/R(x)) / \log(100/R(s)) \quad (6).$$

2. Elektrogeschmolzene Aluminiumoxidkörner nach Anspruch 1, wobei der Zirkoniumgehalt in Form von $ZrO_2$ 0,01 bis 2,00 Massenprozent in den elektrogeschmolzenen Aluminiumoxidkörnern beträgt.

3. Elektrogeschmolzene Aluminiumoxidkörner nach Anspruch 1 oder 2, wobei der Zirkoniumgehalt in Form von $ZrO_2$ 40 mol bis 67 mol bezogen auf 100 mol des Wolframgehalts in Form von $WO_3$ und des Molybdängehalts in Form von $MoO_3$ beträgt.

4. Verfahren zur Herstellung von elektrogeschmolzenen Aluminiumoxidkörnern nach Anspruch 1, umfassend:

Schritt (A) des Herstellens eines Mischungsmaterials durch Mischen eines Aluminiumoxidmaterials, einer Zirkoniumverbindung und mindestens entweder einer Wolframverbindung oder einer Molybdänverbindung, wobei die Menge der Wolframverbindung und der Molybdänverbindung eine solche Menge ist, dass der als $WO_3$ ausgedrückte Wolframgehalt und der als $MoO_3$ ausgedrückte Molybdängehalt in einem in Schritt (B) gebildeten Barren 0,05 bis 3,00 Massenprozent beträgt,
Schritt (B) der Formung eines Barrens aus dem Mischmaterial durch ein Elektrosch melzverfahren,
Schritt (C) des Mahlens des Barrens zur Herstellung eines gemahlenen Pulvers,
Schritt (D) der Größenregulierung des gemahlenen Pulvers, so dass es eine vorbestimmte Korngröße aufweist, um größenregulierte Körner herzustellen, und
Schritt (E) des Erhitzens der größenregulierten Körner bei einer Heiztemperatur von 1000 °C oder höher und 1900°C oder niedriger, um elektrogeschmolzene Aluminiumoxidkörner zu erhalten.

5. Verfahren zur Herstellung von elektrogeschmolzenen Aluminiumoxidkörnern nach Anspruch 4, wobei die Menge der Zirkoniumverbindung, die im Schritt (A) der Herstellung des Mischungsmaterials gemischt wird, eine solche Menge ist, dass der als $ZrO_2$ ausgedrückte Zirkoniumgehalt in dem Block 0,01 bis 2,00 Massenprozent beträgt.

6. Verfahren zur Herstellung von elektrogeschmolzenen Aluminiumoxidkörnern nach Anspruch 4 oder 5, wobei die Menge der im Schritt (A) der Herstellung des Mischungsmaterials gemischten Zirkoniumverbindung eine solche Menge ist, dass der als $ZrO_2$ ausgedrückte Zirkoniumgehalt im Barren 40 bis 67 Mol, bezogen auf 100 Mol des Gesamtgehalts des als $WO_3$ ausgedrückten Wolframgehalts und des als $MoO_3$ ausgedrückten Molybdängehalts beträgt.

7. Verfahren zur Herstellung von elektrogeschmolzenen Aluminiumoxidkörnern nach einem der Ansprüche 4 bis 6, wobei die Heiztemperatur im Schritt (E) der Herstellung der elektrogeschmolzenen Aluminiumoxidkörner 1200°C oder höher und 1700°C oder niedriger ist.

8. Schleifstein, der die elektrogeschmolzenen Aluminiumoxidkörner nach einem der Ansprüche 1 bis 3 enthält.

9. Beschichtetes Schleifmittel, umfassend die elektrogeschmolzenen Aluminiumoxidkörner nach einem der Ansprüche 1 bis 3.

**Revendications**

1. Grains d'alumine électrofusionnés comprenant du zirconium et au moins soit l'un du tungstène ou du molybdène, dans lesquels le total d'une teneur en tungstène en termes de $WO_3$ et d'une teneur en molybdène en termes de $MoO_3$ est de 0,05 à 3,00 % en masse, et satisfaisant l'expression (1) suivante :

$$y < -1,506x + 3,605 \quad (1)$$

dans laquelle $\times$ représente la densité spécifique apparente d'étage C des grains d'alumine électrofusionnés, telle que déterminée conformément à la JIS R6126-1970 en utilisant un appareil composé d'un entonnoir, d'un bouchon et d'un cylindre et un support pour celui-ci par le procédé suivant :

(1) le volume V (ml) du cylindre a été mesuré ;
(2) l'orifice de sortie de l'entonnoir a été bouché avec un bouchon, environ 120 ml d'un échantillon ont été placés dans l'entonnoir, et le cylindre a été disposé immédiatement en dessous de l'entonnoir ;
(3) le bouchon a été retiré pour laisser tomber la quantité totale de l'échantillon dans le cylindre, l'échantillon accumulé sur le dessus du cylindre a été éliminé en le recueillant délicatement, et ensuite le poids de l'échantillon mis dans le cylindre a été mesuré ;
(4) l'opération de (2) et (3) a été répétée pour le même échantillon pour obtenir trois valeurs mesurées : W1 (g), W2 (g) et W3 (g) ;
(5) à partir du volume V (ml) du cylindre obtenu en (1), et des trois valeurs mesurées : W1 (g), W2 (g) et W3 (g) obtenues en (4), la densité spécifique apparente d'étage C a été calculée par l'expression (7) suivante :

$$\text{densité spécifique apparente d'étage C (g/ml)} = \{(W1 + W2 + W3) / 3\} / V \quad (7) ;$$

et

dans laquelle y représente le coefficient C des grains d'alumine électrofusionnés, tel que déterminé par un procédé dans lequel, en utilisant un tamis standard spécifié dans la JIS R6001-1987, 250 g de grains d'alumine électrofusionnés ont été tamisés par un appareil d'essai rotap pendant 10 minutes ; la quantité totale de l'échantillon restant sur le tamis du 3e étage a été tamisée pendant 10 minutes supplémentaires, et 100 g des grains d'alumine électrofusionnés restant à nouveau sur le tamis du 3e étage ont été utilisés en tant qu'échantillon test ; l'échantillon test a été broyé avec un broyeur à boulets par le procédé spécifié dans la JIS R6128-1975 pour préparer un échantillon broyé ; l'échantillon broyé a été tamisé en utilisant un tamis standard pendant 5 minutes, et le poids de l'échantillon broyé restant sur le 4e tamis a été appelé R (x) ; en tant qu'échantillon étalon, un abrasif de carbure de silicium noir F 60 spécifié dans la JIS R6128-1975 a été soumis à la même opération que ci-dessus, et après broyage avec un broyeur à boulets, le poids de F60 restant sur le tamis du 4e étage a été appelé R(s) ; le coefficient C a été calculé par l'expression (6) suivante :

$$\text{Coefficient C} = \log(100/R(x)) / \log(100/R(s)) \quad (6).$$

2. Grains d'alumine électrofusionnés selon la revendication 1, dans lesquels une teneur en zirconium en termes de $ZrO_2$ est de 0,01 à 2,00 % en masse dans les grains d'alumine électrofusionnés.

3. Grains d'alumine électrofusionnés selon la revendication 1 ou 2, dans lesquels la teneur en zirconium en termes de $ZrO_2$ est de 40 mol à 67 mol par rapport à 100 mol au total de la teneur en tungstène en termes de $WO_3$ et de la teneur en molybdène en termes de $MoO_3$.

4. Procédé de production de grains d'alumine électrofusionnés selon la revendication 1 comprenant :

étape (A) de préparation d'un matériau de mélange par mélange d'un matériau d'alumine, d'un composé de zirconium, et d'au moins soit l'un d'un composé de tungstène ou d'un composé de molybdène, dans lequel la quantité du composé de tungstène et du composé de molybdène est une quantité telle que la teneur du tungstène en termes de $WO_3$ et du molybdène en termes de $MoO_3$ dans un lingot formé à l'étape (B) est de 0,05 à 3,00 % en masse,

étape (B) de formation d'un lingot à partir du matériau de mélange par un procédé d'électrofusion,

étape (C) de broyage du lingot pour préparer une poudre broyée,

étape (D) de régulation de la taille de la poudre broyée pour avoir une taille de grain prédéterminée pour préparer des grains à taille régulée, et

étape (E) de chauffage des grains à taille régulée à une température de chauffage de 1 000 °C ou plus et de 1 900 °C ou moins pour donner des grains d'alumine électrofusionnés.

5. Procédé de production de grains d'alumine électrofusionnés selon la revendication 4, dans lequel la quantité du composé de zirconium mélangé à l'étape (A) de préparation du matériau de mélange est une quantité telle que la teneur en zirconium en termes de $ZrO_2$ dans le lingot est de 0,01 à 2,00 % en masse.

6. Procédé de production de grains d'alumine électrofusionnés selon la revendication 4 ou 5, dans lequel la quantité du composé de zirconium mélangé à l'étape (A) de préparation du matériau de mélange est une quantité telle que la teneur en zirconium en termes de $ZrO_2$ dans le lingot est de 40 mol à 67 mol par rapport à 100 mol au total de la teneur en tungstène en termes de $WO_3$ et de la teneur en molybdène en termes de $MoO_3$.

7. Procédé de production de grains d'alumine électrofusionnés selon l'une quelconque des revendications 4 à 6, dans lequel la température de chauffage dans l'étape (E) de production des grains d'alumine électrofusionnés est de 1 200 °C ou plus et de 1 700 °C ou moins.

8. Meule comprenant les grains d'alumine électrofusionnés selon l'une quelconque des revendications 1 à 3.

9. Abrasif revêtu comprenant les grains d'alumine électrofusionnés selon l'une quelconque des revendications 1 à 3.

[Fig. 1]

[Fig. 2]

[Fig. 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5080305 A
- JP H07215717 A
- CN 10723555741 A